# EUROPÄISCHE PATENTSCHRIFT

(11) **EP 1 460 108 B1**
(45) Veröffentlichungstag und Bekanntmachung des Hinweises auf die Patenterteilung: **03.10.2012**
(21) Anmeldenummer: 04100131.4
(22) Anmeldetag: 16.01.2004
(51) Int. Cl.: C08L 77/00, C08L 33/12, C08L 33/24, B29C 67/00

(54) **Verfahren zur Herstellung von Formkörpern durch selektives Lasersintern von Sinterpulver aus einem Polyamid und einem poly(N-methylmethacrylimid) und daraus hergestellte Formkörper**
Process for the preparation of articles by selective laser sintering of sinter powder comprising a polyamide and a poly(N-methylmethacrylimide) and articles prepared thereby
Procédé pour la préparation de produits moulés par frittage sélectif au laser à partir d'une poudre pour frittage comprenant un polyamide et un poly(N-méthylméthacrylimide) et produits moulés préparés par ce procédé

(30) Priorität: 15.03.2003 DE 10311437
(43) Veröffentlichungstag der Anmeldung: 22.09.2004
(73) Patentinhaber: Evonik Degussa GmbH, 45128 Essen (DE)
(72) Erfinder: Petter, Christoph, 21509, Glinde (DE); Grebe, Maik, 44805, Bochum (DE); Monsheimer, Sylvia, 45721, Haltern am See (DE); Baumann, Franz-Erich, Dr., 48249, Dülmen (DE)

(56) Entgegenhaltungen:
- EP-A- 0 109 145
- EP-A- 0 293 292
- EP-A- 0 618 390
- EP-A- 0 649 739
- DE-A- 4 421 454
- SCHMACHTENBERG E ET AL: "LASERSINTERN VON POLYAMID. LASER-SINTERING OF POLYAMIDE" KUNSTSTOFFE, CARL HANSER VERLAG. MUNCHEN, DE, Bd. 87, Nr. 6, 1. Juni 1997 (1997-06-01), Seiten 773-774,776, XP000656866 ISSN: 0023-5563

## Beschreibung

Die Erfinding betrillt ein Verfahren zur Herstellung von Formkörpern durch selektives Laser-Sintern von Sinterpulver,
dadurch gekennzeichnet,
dass das Pulver zumindest ein Polyamid und auf die Summe der im Pulver vorhandenen Polymere von 1 bis 12 Gew.-% ein Poly(N-methylmethacrylimid) (PMMI) aufweist, wobei die Polyamidpartikel eine mittlere Partikelgröße von 40 bis 100 µm aufweisen, sowie Formkörper, hergestellt durch die selektiven Laser-Sinter-Verfahren.

Die zügige Bereitstellung von Prototypen ist eine in der jüngsten Zeit häufig gestellte Aufgabe. Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel verlaufen ineinander und erstarren schnell wieder zu einer festen Masse. Durch wiederholtes Belichten von immer neu aufgebrachten Schichten können mit diesem Verfahren dreidimensionale Körper auch komplexer Geometrie einfach und schnell hergestellt werden.

Das Verfahren des Laser-Sinterns (Rapid Prototyping) zur Darstellung von Formkörpern aus pulverförmigen Polymeren wird ausführlich in den Patentschriften US 6,136,948 und WO 96/06881 (beide DTM Corporation) beschrieben. Eine Vielzahl von Polymeren und Copolymeren kann für diese Anwendung eingesetzt werden, wie z. B. Polyacetat, Polypropylen, Polyethylen, Ionomere und Polyamid.

In der Praxis hat sich beim Laser-Sintern vor allem Polyamid 12-Pulver (PA 12) für die Herstellung von Formkörpern, insbesondere von technischen Bauteilen bewährt. Die aus PA-12 Pulver gefertigten Teile genügen den hohen Anforderungen, die bezüglich der mechanischen Beanspruchung gestellt werden und kommen damit in ihren Eigenschaften besonders nahe an die späteren Serienteile, die durch Extrusion oder Spritzgießen erstellt werden.

EP 0 109 145 beschreibt kompatible Polymermischungen bestehend aus 1 bis 99 Gew.% eines imidierten Acrylpolymeren, enthaltend wenigstens 5 Gew.% Glutarimideinheiten, und 99 bis 1 Gew.% Polyamid.

EP 0 649 739 betrifft ein mehrschichtiges Kunststoffrohr bestehend aus einer Außenschicht, einer Zwischenschicht aus Polyamid und Polyglutarimid sowie einer Innenschicht aus Polyvinylidenfluorid, das durch Extrusion hergestellt wird.

Schmachtenberg et al. beschreiben in "Lasersintern von Polyamid", Kunststoffe, Carl Hanser Verlag, Band 87, Nr. 6, Seiten 773 ff, den Einsatz von Polyamiden beim Laser-Sintern.

Gut geeignet ist dabei ein PA 12-Pulver mit einer mittleren Korngröße (d₅₀) von 50 bis 150 µm, wie man es beispielsweise gemäß DE 197 08 946 oder auch DE 44 21 454 erhält. Vorzugsweise wird dabei ein Polyamid 12 Pulver mit einer Schmelztemperatur von 185 bis 189 °C, einer Schmelzenthalpie von 112 ± 17 J/g und einer Erstarrungstemperatur von 138 bis 143 °C, wie es in EP 0 911 142 beschrieben wird, verwendet.

Trotz der bereits guten Eigenschaften der bekannten Polymerpulver weisen mit solchen Pulvern hergestellte Formkörper noch immer einige Nachteile auf. Nachteilig bei den derzeit eingesetzten Polyamid-Pulvern sind insbesondere raue Oberflächen an den Formkörpern, die durch die Grenze zwischen auf- oder angeschmolzenen Partikeln und den umgebenden, nicht geschmolzenen Partikeln bestimmt wird. Ferner ist die Bildung von ausgedehnten Kristallitstrukturen beim Abkühlen der Formteile aus Sinterpulver aus Polyamid insofern nachteilig, dass hierdurch erhöhter Schwund oder sogar Verzug der Teile zu beobachten ist. Insbesondere größere Bauteile oder Bauteile, bei denen der Schwund teilweise behindert ist, neigen zum Verzug. Die sehr rauhen Oberflächen erfordern eine Beschichtung, um ansprechende Teile zu erhalten. Zudem lässt auf Grund der Rauhigkeit der Oberfläche die Auflösung von kleinen Strukturen zu wünschen übrig, da sie zusammen wachsen.

Aufgabe der vorliegenden Erfindung war es deshalb, ein Laser-Sinter-Pulver bereitzustellen, welches eine bessere Maßhaltigkeit und Oberflächenbeschaffenheit bei den mittels selektivem Lasersintern hergestellten Teilen ermöglicht.

Überraschenderweise wurde nun gefunden, dass sich durch Zugabe von Poly(Nmethylmethacrylimid)(PMMI) zu Polyamiden Sinterpulver herstellen lassen, aus denen sich Formkörper durch Laser-Sintern produzieren lassen, die deutlich maßhaltiger und glatter sind als Formkörper aus herkömmlichen Sinter-Pulvern.

Gegenstand der vorliegenden Erfindung sind Formkörper, hergestellt durch Laser-Sintern, welche dadurch gekennzeichnet sind, dass sie PMMI und zumindest ein Polyamid aufweisen.

Das Sinterpulver hat den überraschenden Vorteil, dass aus ihm durch Laser-Sintern hergestellte Formkörper eine sehr glatte Oberfläche haben. Auch kleine Konturen, beispielsweise Schriftzüge, werden sehr gut aufgelöst. Damit eröffnen sich Anwendungsbereiche, die bisher aufgrund der schlechten Auflösung nicht möglich waren.

Die sehr gute Maßhaltigkeit der Bauteile erhöht die Verfahrenssicherheit enorm, da es möglich ist, direkt im ersten Schritt die gewünschten Maße abzubilden. Dies ist bei der Verwendung herkömmlicher Pulver häufig nicht der Fall, weshalb Bauteile beim ersten Bauen verzogen sind, und das Sintern mit anderen Verarbeitungsparametern oder anderer Platzierung im Bauraum wiederholt werden muss.

Außerdem konnte überraschenderweise festgestellt werden, dass Formkörper, hergestellt aus dem Sinterpulver, gleichbleibend gute oder sogar verbesserte mechanische Eigenschaften aufweisen, insbesondere hinsichtlich Elastizitätsmodul, Zugfestigkeit und Dichte.

Das Sinterpulver sowie ein Verfahren zu dessen Herstellung wird nachfolgend beschrieben, ohne dass die Erfindung darauf beschränkt sein soll.

Das Sinterpulver zum selektiven Laser-Sintern zeichnet sich dadurch aus, dass das Pulver zumindest ein Polyamid und zumindest ein PMMI aufweist. Als Polyamid weist das erfindungsgemäße Sinterpulver vorzugsweise ein Polyamid auf, welches pro Carbonamid-Gruppe mindestens 8 Kohlenstoffatome aufweist. Bevorzugt weist das erfindungsgemäße Sinterpulver mindestens ein Polyamid auf, welches 10 oder mehr Kohlenstoffatome pro Carbonamid-Gruppe aufweist. Ganz besonders bevorzugt weist das Sinterpulver zumindest ein Polyamid, ausgewählt aus Polyamid 612 (PA 612), Polyamid 11 (PA 11) und Polyamid 12 (PA 12) oder Copolyamide, basierend auf den vorgenannten Polyamiden, auf. Das erfindungsgemäße Sinterpulver weist vorzugsweise ein ungeregeltes Polyamid auf.

Für das Lasersintern ist insbesondere ein Polyamid 12 Sinterpulver geeignet, welches eine Schmelztemperatur von 185 bis 189 °C, vorzugsweise von 186 bis 188 °C, eine Schmelzenthalpie von 112 ± 17 J/g, vorzugsweise von 100 bis 125 J/g und eine Erstarrungstemperatur von 133 bis 148 °C, vorzugsweise von 139 bis 143 °C aufweist. Der Prozess für die Herstellung für die den erfindungsgemäßen Sinterpulvern zugrunde liegenden Polyamidpulver ist allgemein bekannt und kann im Fall von PA 12 z. B. den Schriften DE 29 06 647, DE 35 10 687, DE 35 10 691 und DE 44 21 454, deren Inhalt zum Offenbarungsgehalt der vorliegenden Erfindung gehören sollen, entnommen werden. Das benötigte Polyamidgranulat kann von verschiedenen Herstellern bezogen werden, beispielsweise wird Polyamid 12 Granulat von der Degussa AG unter dem Handelsnamen VESTAMID angeboten.

Ebenfalls besonders gut geeignet ist Polyamid 12, welches eine Schmelztemperatur von 185 bis 189 °C, vorzugsweise von 186 bis 188 °C, eine Schmelzenthalpie von 120 ± 17 J/g, vorzugsweise von 110 bis 130 J/g und eine Erstarrungstemperatur von 130 bis 140 °C, vorzugsweise von 135 bis 138 °C und vorzugsweise auch eine Kristallisationstemperatur nach einer Alterung von 135 bis 140 °C aufweist. Die Ermittlung dieser Messwerte erfolgte wie in EP 0 911 142 beschrieben mittels DSC. Die Alterung erfolgte durch Lagerung im Vakuumtrockenschrank VT 5142 EK der Firma Heraeus für 7 Tage bei 150 °C. Polyamid 12 Pulver, die solche Eigenschaften aufweisen, sind beispielsweise in DE 102 55 793 beschrieben und weisen bevorzugt Metallseifen auf.

Das Sinterpulver weist bezogen auf die Summe der im Pulver vorhandenen Polymere von 1 bis 12 Gew.-% PMMI auf. Die angegebenen Bereiche beziehen sich dabei auf den Gesamtgehalt an PMMI im Pulver, wobei mit Pulver die gesamte aus Komponenten bestehende Menge gemeint ist. Das Sinterpulver kann eine Mischung von PMMI-, partikeln und Polyamid partikeln aufweisen oder aber Polyamidpartikel bzw. - pulver, welche eingearbeitetes PMMIaufweisen. Bei einem Anteil an PMMI von unter 0,01 Gew.-% bezogen auf die Summe der im Pulver vorhandenen Polymere nimmt der gewünschte Effekt der Maßhaltigkeit und der Oberflächengüte deutlich ab. Bei einem Anteil an PMMI von über 30 Gew.-% bezogen auf die Summe der im Pulver vorhandenen Polymere verschlechtern sich die mechanischen Eigenschaften wie z. B. die Reißdehnung der aus solchen Pulvern hergestellten Formkörper deutlich.

Weist das Sinterpulver eine Mischung von Polyamid partikeln und PMMI-,partikel auf, so weisen die Polyamidpartikel eine mittlere Partikelgröße von 40 bis 100 µm und besonders bevorzugt von 45 bis 80 µm auf. Die PMMI-partikel weisen vorzugsweise eine Partikelgröße auf, die die mittlere Korngröße d₅₀ der Polyamidpartikel bzw. -pulver um nicht mehr als 20 %, vorzugsweise um nicht mehr als 15 % und ganz besonders bevorzugt um nicht mehr als 5 % über- bzw. unterschreiten. Die Korngröße ist insbesondere limitiert durch die zulässige Bauhöhe bzw. Schichtdicke in der Laser-Sinter-Apparatur.

Weist das Sinterpulver Partikel auf, die sowohl Polyamid als auch zumindest ein PMMI aufweisen, so beträgt die mittlere Korngröße d₅₀ der Partikel vorzugsweise von 10 bis 250 µm, vorzugsweise von 40 bis 100 µm und besonders bevorzugt von 45 bis 80 µm.

Die im Sinterpulver enthaltenen Poly(N-methylmethacrylimide) (PMMI) sind vorzugsweise Copolymere von PMMI und PMMA, welches durch teilweise Cycloimidisierung des PMMA hergestellt werden. (PMMI, welches durch Teilimidisierung von PMMA hergestellt wird, wird üblicherweise so hergestellt, dass maximal 83 % des eingesetzte PMMA imidisiert werden. Das dabei entstehende Produkt wird als PMMI bezeichnet, ist streng genommen aber ein PMMI-PMMA-Copolymer.) PMMI ist kommerziell erhältlich, z. B. unter dem Markennamen Pleximid der Firma Röhm. Ein beispielhaftes Copolymer (Pleximid 8803) hat 33 % MMI-Einheiten, 54,4 % MMA-Einheiten, 2,6 % Methacrylsäureeinheiten und 1,2 % Anhydrideinheiten.

Als Poly(N-methylmethacrylimide) können insbesondere solche eingesetzt werden, die mindestens die nachstehenden Zusammensetzungen aufweisen:
i) 14 bis 85 Gew.-Teile, vorzugsweise
   30 bis 70 Gew.- Teile 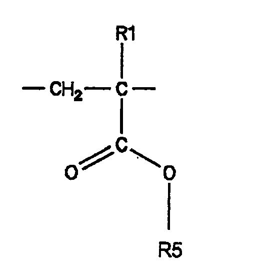
ii) 10 bis 75 Gew.-Teile, vorzugsweise
   20 bis 40 Gew.-Teile 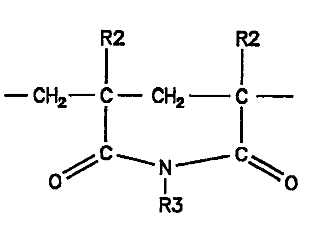
iii) 0 bis 15 Gew.-Teile 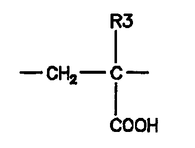
iiii) 1 bis 20 Gew.-Teile, vorzugsweise
   2 bis 12 Gew.-Teile

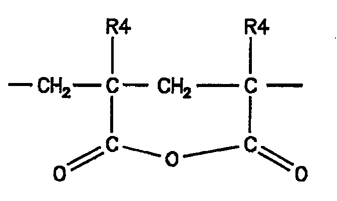

In den genannten Formeln bedeuten
R1 bis R5 gleiche oder verschiedene aliphatische oder alicyclische Reste mit 1 bis 40 C-Atomen, bevorzugt -CH₃.

Die Copolymere werden als Polymethacrylimide, manchmal auch als Polyglutarimide bezeichnet. Es handelt sich hierbei um Polymethyl(meth)acrylate, bei denen zwei benachbarte Carboxyl(at)gruppen zu einem cyclischen Säureimid umgesetzt worden sind. Die Imidbildung wird bevorzugt mit Ammoniak bzw. primären Aminen, wie z. B. Methylamin, durchgeführt. Die Produkte sowie ihre Herstellung sind bekannt (Hans R. Kricheldorf, Handbook of Polymer Synthesis, Part A, Verlag Marcel Dekker Inc. New York - Basel - Hongkong, S. 223 f.; H. G. Elias, Makromoleküle, Hüthig und Wepf Verlag Basel - Heidelberg - New York; US-PSS 2 146 209, 4 246 374).

Das Sinterpulver kann Rieselhilfen oder auch weitere Hilfsstoffe und/oder Füllstoffe und/oder Pigmente aufweisen. Solche Hilfsstoffe können z. B. pyrogenes Siliziumdioxid oder auch gefällte Kieselsäuren sein. Pyrogenes Siliziumdioxid (pyrogene Kieselsäuren) wird zum Beispiel unter dem Produktnamen Aerosil®, mit unterschiedlichen Spezifikationen, durch die Degussa AG angeboten. Vorzugsweise weist das Sinterpulver weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polymere, also der Summe aus Polyamiden und PMMI auf. Die Füllstoffe können z. B. Glas-, Aluminium-, Metall- oder Keramikpartikel, wie z. B. massive oder hohle Glaskugeln, Stahlkugeln oder Metallgrieß oder auch Buntpigmente, wie z. B. Übergangsmetalloxide sein.

Die Füllstoffpartikel weisen dabei vorzugsweise eine kleinere oder ungefähr gleich große mittlere Korngröße wie die Partikel der Polyamide auf. Vorzugsweise sollte die mittlere Korngröße d₅₀ der Füllstoffe die mittlere Korngröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Laser-Sinter-Apparatur.

Vorzugsweise weist das Sinterpulver weniger als 70 Gew.-%, bevorzugt von 0,001 bis 60 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polymere auf, so dass der Volumenanteil der Polymere in jedem Fall größer 50 % beträgt.

Beim Überschreiten der angegebenen Höchstgrenzen für Hilfs- und/oder Füllstoffe kann es, je nach eingesetztem Füll- oder Hilfsstoff zu deutlichen Verschlechterungen der mechanischen Eigenschaften von Formkörpern kommen, die mittels solcher Sinterpulver hergestellt wurden. Die Überschreitung kann außerdem zu einer Störung der Eigenabsorption des Laserlichts durch das Sinterpulver führen, so dass ein solches Pulver für das selektive Lasersintern nicht mehr einsetzbar ist.

Die Herstellung der Sinterpulver ist einfach möglich und erfolgt bevorzugt gemäß dem Verfahren zur Herstellung von Sinterpulver, welches sich dadurch auszeichnet, dass zumindest ein Polyamid mit zumindest einem PMMI vermischt wird. Das Mischen kann Trocken oder in Suspension erfolgen. Vorzugsweise wird ein z. B. durch Umfällung und/oder Vermahlung erhaltenes Polyamidpulver, welches auch noch anschließend fraktioniert werden kann, mit PMMI vermischt. Das Polyamid kann weiterhin mit PMMI zu einem Sinterpulver compoundiert und anschließend vermahlen werden. Ebenso ist als weitere Ausführungsform möglich, dass das Polyamid in Gegenwart eines Lösungsmittels suspendiert wird, in welchem das PMMI zumindest eine gewisse Löslichkeit aufweist, mit PMMI vermischt wird und das Dispergier-/Lösemittel anschließend wieder entfernt wird.

Eine feinteilige Vermischung kann in der einfachsten Ausführungsart des Verfahrens beispielsweise durch Aufmischen fein gepulverten PMMI-pulvers auf das trockene Polyamidpulver in schnelllaufenden mechanischen Mischern erfolgen oder als Naßmischung in langsamlaufenden Aggregaten - z. B. Schaufeltrockner oder umlaufenden Schneckenmischem (sog. Nautamischem) - oder durch Dispergieren von PMMI und Polyamid (pulvers) in einem organischen Lösungsmittel und anschließende destillative Entfernung des Lösungsmittels. Für diese Variante geeignete Lösemittel sind beispielsweise niedere Alkohole mit 1 bis 3 C-Atomen, bevorzugt kann Ethanol als Lösemittel eingesetzt werden.

Das Polyamidpulver kann bei einer dieser ersten Varianten des Verfahrens ein bereits als Lasersinterpulver geeignetes Polyamidpulver sein, dem einfach feinteilige PMMI-Partikel zugemischt werden. Die Partikel weisen dabei vorzugsweise eine ungefähr gleich große mittlere Korngröße wie die Partikel der Polyamide auf. Vorzugsweise sollte die mittlere Korngröße d₅₀ der PMMI-, Partikel die mittlere Korngröße d₅₀ der Polyamidpulver um nicht mehr als 20 %, vorzugsweise um nicht mehr als 15 % und ganz besonders bevorzugt um nicht mehr als 5 % über- bzw. unterschreiten. Die Korngröße ist insbesondere limitiert durch die zulässige Bauhöhe bzw. Schichtdicke in der Laser-Sinter-Apparatur.

Es ist ebenso möglich, herkömmliche Sinterpulver mit Sinterpulvem zu mischen. Auf diese Weise lassen sich Sinterpulver mit einer optimalen Kombination von mechanischen und optischen Eigenschaften herstellen. Das Verfahren zur Herstellung solcher Mischungen kann z. B. DE 34 41 708 entnommen werden.

In einer weiteren Verfahrensvariante wird PMMI mit einem, vorzugsweise geschmolzenem Polyamid durch Eincompoundieren gemischt und das erhaltene PMMI-, -haltige Polyamid wird durch (Kalt-)-Mahlung und gegebenenfalls Fraktionierung zu Lasersinterpulver verarbeitet. Üblicherweise wird bei der Compoundierung ein Granulat erhalten, welches anschließend zu Sinterpulver, in der Regel durch Kaltmahlung, verarbeitet wird. Die Verfahrensvariante, bei welcher PMMIeincompoundiert wird, hat gegenüber dem reinen Mischungsverfahren den Vorteil, dass eine homogenere Verteilung des PMMI in dem Sinterpulver erzielt wird.

Gegebenenfalls kann zur Verbesserung des Rieselverhaltens dem Pulver eine geeignete Rieselhilfe, wie pyrogenes Aluminiumoxid, pyrogenes Siliziumdioxid oder pyrogenes Titandioxid, dem gefällten oder kaltgemahlenen Pulver äußerlich zugesetzt werden.

In einer weiteren Verfahrensvariante wird PMMI in Form von Pulver bereits beim Fällprozess dem Polyamid zugemischt, vorzugsweise in der frisch ausgefallenen Suspension. Ein solcher Fällprozess ist beispielsweise in DE 35 10 687 und DE 29 06 647 beschrieben.

Der Fachmann kann diese Verfahrenvariante in abgewandelter Form auch auf andere Polyamide anwenden, wobei Polyamid und Lösemittel so gewählt werden müssen, dass sich das Polyamid bei einer erhöhten Temperatur in dem Lösemittel löst und dass das Polyamid bei einer niedrigeren Temperatur und/oder beim Entfernen des Lösemittels aus der Lösung ausfällt. Durch Zugabe von PMMIvorzugsweise in Form von Partikeln, zu dieser Lösung und anschließende Trocknung werden die entsprechenden erfindungsgemäßen Polyamid-Lasersinterpulver erhalten.

Als PMMI können handelsübliche Produkte, die beispielsweise bei der Fa. Röhm unter dem Handelsnamen Pleximid® bezogen werden können, bzw. die oben beschriebenen eingesetzt werden.

Zur Verbesserung der Verarbeitungsfähigkeit oder zur weiteren Modifikation des Sinterpulvers können diesem anorganische Pigmente, insbesondere Buntpigmente, wie z. B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren sowie Füllstoffpartikel zugegeben werden. Vorzugsweise wird, bezogen auf das Gesamtgewicht an Polyamiden im Sinterpulver, soviel dieser Stoffe den Polyamiden zugegeben, dass die für das Sinterpulver angegebenen Konzentrationen für Füll- und/oder Hilfsstoffe eingehalten werden.

Gegenstand der vorliegenden Erfindung sind Verfahren gemäß Anspruch 1 zur Herstellung von Formkörpern durch selektives Lasersintern bei denen Sinterpulver, die Polyamid und PMMI, also PMMA, welches teilweise imidisiert wurde, oder Copolymere davon, vorzugsweise in partikulärer Form aufweisen, eingesetzt werden. Insbesondere ist Gegenstand der vorliegenden Erfindung ein Verfahren zur Herstellung von Formkörpern durch selektives Lasersintem eines PMMI-haltigen Fällpulvers auf Basis eines Polyamid 12, welches eine Schmelztemperatur von 185 bis 189 °C, eine Schmelzenthalpie von 112 ± 17 J/g und eine Erstarrungstemperatur von 136 bis 145 °C aufweist und dessen Verwendung in US 6,245,281 beschrieben wird.

Die Laser-Sinter-Verfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinanderfolgende Versinterung von Schichten von Polymerpartikeln werden dreidimensionale Objekte hergestellt. Einzelheiten zum Verfahren des selektiven Laser-Sinterns sind z. B. den Schriften US 6,136,948 und WO 96/06881 zu entnehmen.

Die Formkörper, die durch selektives Laser-Sintern hergestellt werden, zeichnen sich dadurch aus, dass sie zumindest PMMI und zumindest ein Polyamid aufweisen. Vorzugsweise weisen die Formkörper zumindest ein Polyamid auf, welches pro Carbonamid-Gruppe mindestens 8 Kohlenstoffatome aufweist. Ganz besonders bevorzugt weisen die Formkörper zumindest ein Polyamid 612, Polyamid 11 und/oder ein Polyamid 12 und PMMI auf.

Das in dem erfindungsgemäßen Formkörper vorhandene PMMI basiert auf PMMA, welches teilweise cycloimidisiert wurde. Der Formkörper weist, bezogen auf die Summe der im Formkörper vorhandenen Polymere, von 1 bis 12 Gew.-% an PMMI auf.

Die Formkörper können außerdem Füllstoffe und/oder Hilfsstoffe und/oder Pigmente, wie z. B. thermische Stabilisatoren und/oder Oxidationsstabilisatoren wie z. B. sterisch gehinderte Phenolderivate aufweisen. Füllstoffe können z. B. Glas-, Keramikpartikel und auch Metallpartikel wie zum Beispiel Eisenkugeln, bzw. entsprechende Hohlkugeln sein. Bevorzugt weisen die Formkörper Glaspartikel, ganz besonders bevorzugt Glaskugeln auf. Vorzugsweise weisen die Formkörper weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polymere auf. Ebenso bevorzugt weisen die Formkörper weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polymere auf.

Die folgenden Beispiele sollen das erfindungsgemäße Sinterpulver sowie dessen Verwendung beschreiben, ohne die Erfindung auf die Beispiele einzuschränken.

Die in den nachfolgenden Beispielen durchgeführte Bestimmung der BET-Oberfläche erfolgte nach DIN 66131. Die Schüttdichte wurde mit einer Apparatur gemäß DIN 53466 ermittelt.

Die Messwerte der Laserbeugung wurden an einem Malvern Mastersizer S, Ver. 2.18 erhalten. Die Strahlkompensation wird nach einer internen Vorschrift ermittelt und ist ein Maß für die Abbildung der Genauigkeit. Je geringer sie ist, desto genauer kann eine Struktur mit dem Laserstrahl abgebildet werden. Bei dieser Methode werden mit einer Laser-Sintermaschine Stäbe unterschiedlicher Länge gebaut, welche 10 mm breit und 3 mm dick sind. Die Längen betragen 5, 8, 10, 20, 50 und 100 mm. Zur leichteren Handhabung sind sie durch einen schmalen Steg miteinander verbunden. Die Bauteile sind in den vier Ecken des Bauraums platziert. Dabei werden die einzelnen Sets jeweils um 90 Grad zueinander gedreht. Die Längen der Stäbe werden mit Schieblehren vermessen, jeweils an den Seiten und mittig, die Messwerte der 4 Bauteile gemittelt, und anschließend Soll- und Istwerte gegeneinander graphisch aufgetragen. Nach Bestimmen einer Ausgleichgerade durch diese Punkte erhält man den Wert für die Strahlkompensation (in mm); das ist der Schnittpunkt, um den die Ausgleichsgerade aus dem Nullpunkt verschoben ist (konstanter Wert der Geradengleichung).

### Bespiel 1: Vergleichsbeispiel (nicht erfindungsgemäß):

40 kg ungeregeltes, durch hydrolytische Polymerisation hergestelltes PA 12 hergestellt in Anlehnung an DE 35 10 691, Beispiel 1 mit einer relativen Lösungsviskosität η_{rel.} von 1.61 (in angesäuertem m-Kresol) und einem Endgruppengehalt von 72mmol/kg COOH bzw. 68 mmol/kg NH2 werden mit 0,3 kg IRGANO® 1098 in 350 l Ethanol, vergällt mit 2-Butanon und 1 % Wassergehalt, innerhalb von 5 Stunden in einem 0,8 m³-Rührkessel (D = 90 cm, h=170cm) auf 145 °C gebracht und unter Rühren (Blattrührer, d = 42 cm, Drehzahl = 91 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 120 °C gebracht. Von jetzt an wird bei gleicher Kühlrate die Manteltemperatur 2K - 3 K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 111 °C gebracht. Bei dieser Temperatur setzt die Fällung ein, erkennbar an der Wärmeentwicklung. Nach 25 Minuten fällt die Innentemperatur ab, was das Ende der Fällung anzeigt. Nach Abkühlen der Suspension auf 75 °C wird die Suspension in einen Schaufeltrockner überführt. Das Ethanol wird daraus bei laufendem Rührwerk bei 70 °C/400mbar abdestilliert, und der Rückstand anschließend bei 20 mbar/ 85 °C 3 Stunden nachgetrocknet.

| | |
|---|---|
| Siebanalyse | < 32µm: 7 Gew.-% |
| | < 40µm: 16 Gew.-% |
| | < 50µm: 44 Gew.-% |
| | < 63µm: 85 Gew.-% |
| | < 80µm: 92 Gew.-% |
| | < 100µm: 100Gew.-% |
| BET | 6,9m²/g |
| Schüttdichte | 429g/l |
| Laserbeugung | d(10 %): 42µm, d(50 %): 69µm, d(90 %): 91µm |

### Beispiel 2: Einarbeitung von PMMI PLEXimid 8813 durch Compoundierung und anschließende Vermahlung

40 kg geregeltes, durch hydrolytische Polymerisation hergestelltes PA 12, Typ Vestamid L1600 der Degussa AG, werden mit 0,3 kg IRGANOX ® 245 und 0,8 kg PMMI (Pleximid 8813, Röhm GmbH) bei 225°C in einer Zweiwellen-Compoundiermaschine (Bersttorf ZE25) extrudiert und als Strang granuliert. Das Granulat wird anschließend bei tiefen Temperaturen (-40 °C) in einer Prallmühle auf eine Korngrößenverteilung zwischen 0 und 120 µm vermahlen. Anschließend wurden 40 g Aerosil 200 (0,1 Teile) bei Raumtemperatur und 500 U/min 3 Minuten untergemischt.

### Beispiel 3: Einarbeitung von PMMI Pleximid 8813 im Dry Blend

Zu 1900 g (95 Teile) Polyamid 12-Pulver, hergestellt gemäß DE 29 06 647, Beispiel 1 mit einem mittleren Korndurchmesser d₅₀ von 56 µm (Laserbeugung) und einer Schüttdichte gemäß DIN 53466 von 459 g/l wird 100 g (5 Teile) Pleximid 8813 im Dry-Blend-Verfahren unter Benutzung eines Henschelmischers FML10/KM23 bei 700 U/min bei 50 °C in 3 Minuten gemischt. Anschließend wurden 2 g Aerosil 200 (0,1 Teile) bei Raumtemperatur und 500 U/min in 3 Minuten untergemischt.

Unter den selben Bedingungen wurden weitere Pulver hergestellt, die 0, 1, 3, 4 und 10 % Pleximid 8813 aufweisen.

### Weiterverarbeitung:

Die Pulver aus dem Beispiel 3 wurden auf einer Laser-Sinter-Maschine zu den wie oben beschriebenen Probekörpern für die Bestimmung der Strahlkompensation und zu einem Mehrzweckstab nach ISO 3167 verbaut. An letzteren Bauteilen wurden mechanische Werte mittels Zugversuch nach EN ISO 527 ermittelt (Tabelle 1). Die Herstellung erfolgte jeweils auf einer Laser-Sinter-Maschine EOSINT P360 der Firma EOS GmbH.

**Tabelle 1: Proben aus Beispiel 3**

| **Anteil PMMI** | **Strahlkompensation** | **E-Modul N/mm²** | **Reißdehnung %** | **Zugstabdicke mm** | **Zugstabbreite mm** | **Zugfestigkeit N/mm²** |
|---|---|---|---|---|---|---|
| 0 % | 0,82 | 1633 | 20,7 | 4,38 | 10,61 | 46,6 |
| 1 % | 0,79 | 1646 | 19,1 | 4,34 | 10,60 | 46,1 |
| 3 % | 0,77 | 1790 | 16,9 | 4,21 | 10,63 | 49,2 |
| 4 % | 0,77 | 1812 | 14,6 | 4,05 | 10,59 | 49,4 |
| 10 % | 0,73 | 1839 | 7,9 | 4,07 | 10,51 | 47,7 |

Es ist deutlich zu erkennen, dass durch vermehrte Zugabe von PMMI zum Laser-Sinter-Pulver Formkörper hergestellt werden können, die eine deutlich geringere Strahlkompensation aufweisen. Durch die vermehrte Zugabe von PMMI wird außerdem eine Erhöhung des Elastizitätsmoduls erzielt, wobei gleichzeitig die Reißdehnung verringert wird. Die Maße der Formkörper nähern sich mit steigendem Gehalt an PLEX 8813 immer mehr dem Sollwert an, wobei der Sollwert für die Zugstabdicke 4 mm und der Sollwert für die Zugstabbreite 10 mm beträgt.

## Patentansprüche

1. Verfahren zur Herstellung von Formkörpern durch selektives Laser-Sintern von Sinterpulver,
**dadurch gekennzeichnet,**
**dass** das Pulver zumindest ein Polyamid und auf die Summe der im Pulver vorhandenen Polymere von 1 bis 12 Gew.-% ein Poly(N-methylmethacrylimid) (PMMI) aufweist, wobei die Polyamidpartikel eine mittlere Partikelgröße von 40 bis 100 µm aufweisen.

2. Verfahren nach Anspruch 1,
**dadurch gekennzeichnet,**
**dass** ein Polyamid eingesetzt wird, welches pro Carbonamid-Gruppe zumindest 8 Kohlenstoffatome aufweist.

3. Verfahren nach Anspruch 1 oder 2,
**dadurch gekennzeichnet,**
**dass** es Polyamid 612, Polyamid 11 oder Polyamid 12 oder Copolyamide basierend auf den vorgenannten Polyamiden aufweist.

4. Verfahren nach einem der vorhergehenden Ansprüche,
**dadurch gekennzeichnet,**
**dass** das Pulver in Polyamidpartikeln eingearbeitetes PMMI aufweist.

5. Verfahren nach einem der vorhergehenden Ansprüche,
**dadurch gekennzeichnet,**
**dass** das Pulver zusätzlich Hilfsstoffe und/oder Füllstoff und/oder Pigmente aufweist.

6. Verfahren nach einem der vorhergehenden Ansprüche,
**dadurch gekennzeichnet,**
**dass** das Pulver als Hilfsstoff Rieselhilfsmittel aufweist.

7. Verfahren nach einem der vorhergehenden Ansprüche,
**dadurch gekennzeichnet,**
**dass** das Pulver als Füllstoff Glaspartikel aufweist.

8. Verfahren nach einem der vorhergehenden Ansprüche,
**dadurch gekennzeichnet,**
**dass** das Pulver als Füllstoff Aluminiumpartikel aufweist.

9. Verfahren nach Anspruch 1,
**dadurch gekennzeichnet,**
**dass** durch Umfällung oder Vermahlung erhaltenes Polyamidpulver in organischem Lösungsmittel gelöst oder suspendiert oder in Masse mit PMMI vermischt wird.

10. Verfahren nach Anspruch 1,
**dadurch gekennzeichnet,**
**dass** das PMMI in eine Schmelze von Polyamid eincompoundiert und das erhaltene Gemisch durch Vermahlung zu Lasersinterpulver verarbeitet wird.

11. Formkörper, hergestellt durch Laser-Sintern nach einem der vorhergehenden Ansprüche.

## Claims

1. Process for producing moldings by selective laser sintering of sinter powder,
**characterized in that**
the powder comprises at least one polyamide and, based on the entirety of the polymers present in the powder, from 1 to 12% by weight of a poly(N-methylmethacrylimide)(PMMI), the polyamide particles having a median particle size of from 40 to 100 µm.

2. Process according to Claim 1,
**characterized in that**
a polyamide is used which contains at least 8 carbon atoms per carboxamide group.

3. Process according to Claim 1 or 2,
**characterized in that**
it comprises nylon-612, nylon-11, or nylon-12, or copolyamides based on the abovementioned polyamides.

4. Process according to one of the preceding claims,
**characterized in that**
the powder comprises PMMI incorporated into polyamide particles.

5. Process according to one of the preceding claims,
**characterized in that**
the powder also comprises auxiliaries, and/or filler, and/or pigments.

6. Process according to one of the preceding claims,
**characterized in that**
the auxiliary present in the powder comprises flow auxiliary.

7. Process according to one of the preceding claims,
**characterized in that**
the filler present in the powder comprises glass particles.

8. Process according to one of the preceding claims,
**characterized in that**
the filler present in the powder comprises aluminium particles.

9. Process according to Claim 1,
**characterized in that**
polyamide powder obtained by reprecipitation or milling, in suspension or in solution in an organic solvent, or in bulk, is mixed with PMMI.

10. Process according to Claim 1,
**characterized in that**
the PMMI is compounded into a melt of polyamide, and the resultant mixture is processed by milling to give laser sinter powder.

11. Molding produced by laser sintering according to one of the preceding claims.

## Revendications

1. Procédé de fabrication de corps moulés par frittage laser sélectif d'une poudre pour frittage, **caractérisé en ce que** la poudre comprend au moins un polyamide et de 1 à 12 % en poids d'un poly(N-méthylméthacrylimide) (PMMI) par rapport la somme des polymères présents dans la poudre, les particules de polyamide présentant une taille de particule moyenne de 40 à 100 µm.

2. Procédé selon la revendication 1, **caractérisé en ce qu'**un polyamide qui comprend au moins 8 atomes de carbone par groupe carbonamide est utilisé.

3. Procédé selon la revendication 1 ou 2, **caractérisé en ce qu'**elle comprend du polyamide 612, du polyamide 11 ou du polyamide 12 ou des copolyamides à base des polyamides susmentionnés.

4. Procédé selon l'une quelconque des revendications précédentes, **caractérisé en ce que** la poudre comprend du PMMI incorporé dans des particules de polyamide.

5. Procédé selon l'une quelconque des revendications précédentes, **caractérisé en ce que** la poudre comprend également des adjuvants et/ou une charge et/ou des pigments.

6. Procédé selon l'une quelconque des revendications précédentes, **caractérisé en ce que** la poudre comprend un adjuvant d'écoulement en tant qu'adjuvant.

7. Procédé selon l'une quelconque des revendications précédentes, **caractérisé en ce que** la poudre comprend des particules de verre en tant que charge.

8. Procédé selon l'une quelconque des revendications précédentes, **caractérisé en ce que** la poudre comprend des particules d'aluminium en tant que charge.

9. Procédé selon la revendication 1, **caractérisé en ce qu'**une poudre de polyamide obtenue par reprécipitation ou broyage est mélangée avec du PMMI dissoute ou suspendue dans un solvant organique ou en masse.

10. Procédé selon la revendication 1, **caractérisé en ce que** le PMMI est incorporé dans une masse fondue de polyamide et le mélange obtenu est transformé par broyage en une poudre pour frittage laser.

11. Corps moulé, fabriqué par frittage laser selon l'une quelconque des revendications précédentes.
